Europäisches Patentamt

European Patent Office

Office européen des brevets

(19)

(11) Publication number: **0 265 389 B1**

# EUROPEAN PATENT SPECIFICATION

(12)

(45) Date of publication of patent specification: **06.05.92**

(51) Int. Cl.⁵: **B01D 35/06**, B01D 39/18, D21H 27/08, //D21H11/00, D21H17/48,D21H17/67

(21) Application number: **87830116.7**

(22) Date of filing: **26.03.87**

(54) **Liquid lubricant filter with a paper filter element for internal combustion engines, provided with magnetised particles dispersed in the paper.**

(30) Priority: **24.10.86 IT 5399986 U**

(43) Date of publication of application:
**27.04.88 Bulletin 88/17**

(45) Publication of the grant of the patent:
**06.05.92 Bulletin 92/19**

(84) Designated Contracting States:
**AT BE CH DE ES FR GB GR IT LI LU NL SE**

(56) References cited:
**US-A- 2 893 561**
**US-A- 4 201 827**
**US-A- 4 234 378**

adn ü oüinj j in ü üoij üiisn ü üi i

(73) Proprietor: **FIAT LUBRIFICANTI S.r.l.**
**Via Santena 1/3**
**I-10029 Villastellone (Torino)(IT)**

(72) Inventor: **Chiampo, Piero**
**c/o FIAT LUBRIFICANTI S.p.A. Via Santena 1/3**
**I-10029 Villastellone (Torino)(IT)**

(74) Representative: **Notaro, Giancarlo et al**
**c/o Jacobacci-Casetta & Perani S.p.A. Via Alfieri, 17**
**I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 265 389 B1

## Description

The present invention relates to a lubricant filter for internal combustion engines, of the type including a paper filter element in which magnetised particles are dispersed.

Such a filter is disclosed in US-A-2.893.561. In this patent there is no disclosure about the size of the particles.

Studies and experiments made by the applicant have shown that the selection of the particles size and their concentration have to be made carefully in order to obtain good performances of the filter.

Normally, the paper filters have a porosity such as to retain particles larger than 15-20 $\mu$m, it being shown that the greatest damage to the moving parts of the engine indeed result from metal particles with sizes greater than 15-20 $\mu$m.

Moreover, since the paper of the filter elements has a certain elesticity, although having pores with a diameter no greater than 15-20 $\mu$m, it is often unable to retain magnetised particles of larger diameter due to the resilient deformation of the cellulose fibres defining the pores of the paper itself.

The object of the present invention is to provide a magnetic filter which retains almost all metal particles without giving problems of fast plugging and of damage to the moving parts of the engine due to unretained magnetised particles.

This object is achieved by virtue of the fact that the dispersed magnetised particles have an average size between 1 and 8 $\mu$m.

By virtue of this characteristic, a more radical cleaning of the lubricant is obtained without the flow of circulating oil being compromised. Moreover, the filter according to the invention does not create problems if some of magnetised particles are not properly retained by the filter paper, thank to the low average size of magnetised particles themselves.

The ferrous particles which are held by the magnetised particles dispersed in the paper fibres become magnetised themselves by induction, so the filtering power remains constant.

Preferably, the magnetised particles are formed into a paste with the cellulose during the manufacture of the paper for the filter element and the concentration of magnetised particles in the cellulose paste is between 20 and 30% by dry weight.

In order to obtain paper usable in the filter of the invention, one starts with a paper paste containing 75-85% (by weight) of virgin cotton, the 100% being completed by top-quality cellulose. In order to homogenise the paper paste, it is subjected to a moderate beating process for a period of time that is limited by the need to avoid excessive breakage of the cellulose chains which must be long enough (of the order of millimetres) to ensure a tensile strength of the paper greater than 6-8 kg/cm. The paste is subsequently transferred to a vat in which the magnetic powder, constituted by magnetite with a grain size of between 1 and 8 $\mu$m, is added in a ratio of 20-30% by weight of the paste. A thermohardening resin, normally constituted by a water-dispersed phenol/formaldehyde-based monomer, is added to the paste contemporaneously with the magnetite in a ratio of 16-24% with reference to the dry weight of the paste. It is particularly important for the paste to be free from granules larger than 10 $\mu$m after this addition.

The paste with the additives is subsequently transferred to the hopper of a continuous paper machine, where it is kept under constant agitation. The method for obtaining the paper sheet for the manufacture of the filter element is well known to experts in the field and will not be described here. It must be stressed solely that, during the production of the paper sheet, by virtue of the presence of the phenol/formaldehyde resin, a cross-linking-type prepolymerisation takes place which, although avoiding the occlusion of the pores in the paper, gives a suitable consistency for keeping the filter element in its final folded form and a strength 30-35% greater than that of a paper without resin.

It is known that, in the manufacture of paper by the single-wire system, the porosity of the paper decreases from the wire side to the felt side, a greater accumulation of the filler (in this case particles of magnetite) also occurring on the latter side than on the opposite side. Hence, the paper of the filter element must be mounted in the filter cartridge with the wire side upstream and the felt side downstream of the flow. This arrangement favours the capture of the metal wear particles in that they encounter a higher concentration of magnetised particles in the second half of the thickness of the paper of the filter element. With the filter paper made in this way, filters of the so-called easy-change type can be made by an ordinary working process entirely identical to that presently used in industry for the production of conventional filters.

Tests on the filters according to the invention are directed to the evaluation of both the filtering efficiency and the retention of magnetic powder by the paper of the filter element. In these evaluations, the presence or absence of particles which may effectively damage the engine have been taken into consideration. Since, as already pointed out at the beginning of the description, the particles which may effectively result in damage to the engine are those with dimensions greater than 20 $\mu$m, the evaluations

were carried out by measuring the concentration of particles with diameters greater than 20 $\mu$m and the concentration of particles with diameter of less than 5-8 $\mu$m. A ferrograph (D.R. Ferrograph Analyzer of Foxboro Trans-sonic Inc.) was used for the quantitative analysis of these particles in that this instrument is 100% efficienct for particles with dimensions of up to 500 $\mu$m, while other instruments, such as the spectrometer, can give precise valuations only for particles up to 2-3 $\mu$m.

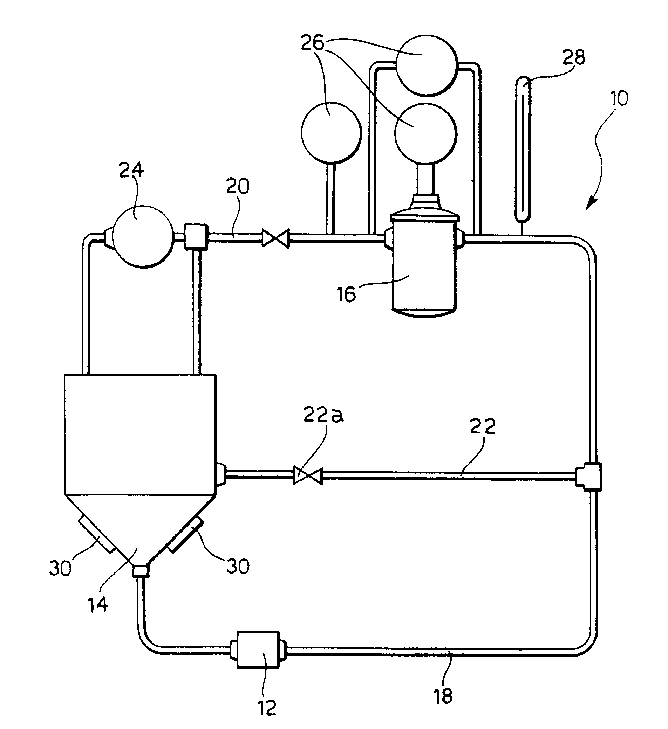

The results of tests carried out on filters according to the invention are given below purely by way of non-limiting example and with reference to the appended drawing showing apparatus which simulates an engine oil circuit.

EXAMPLE 1 (Filtration efficiency-test in the simulation apparatus).

With reference to the appended drawing , the simulation apparatus, generally indicated 10, includes an oil circulation pump 12, an oil tank 14 having a capacity of 6 litres, and an oil filter 16. The apparatus 10 also includes a delivery pipe 18 between the tank 14 and the filter 16, a return pipe 20 from the filter 16 to the tank 14, an auxiliary pipe 22 associated with a bypass valve 22a interposed between the pipe 18 and the tank 14, an oil-flow meter 24, manometers 26 for defining the pressure difference upstream and downstream of the filter, and a thermometer 28 located upstream of the filter. The oil tank 14 includes electrical heating elements 30 for bringing the lubricating oil to a predetermined test temperature.

Used oil from internal combustion engines with controlled ignition or diesel engines, containing a considerable quantity of metal wear particles, was introduced into the tank 14. The lubricant was circulated through the filter at a flow rate equal to that which occurs in a motor vehicle engine under maximum running conditions with a lubricating oil temperature of 90°C for a test duration of 2 hours. Two comparative tests were carried out with the use of the filter element according to the invention, termed a "magnetic filter," and a conventional filter element.

Before and after the tests, oil was removed in order to carry out the ferrography: the relative values of concentrations of metal particles were divided between the particles having average diameters greater than 10-15 $\mu$m (particles L) and particles having average diameters less than 8-10 $\mu$m (particles S).

The test results are given in the Table 1 below.

TABLE 1

|  | Magnetic filter | | Conventional filter | |
| --- | --- | --- | --- | --- |
|  | L | S | L | S |
| Before test | 376 | 42 | 218 | 44 |
| After 2 hours | 9 | 3 | 185 | 38 |
| Efficiency of particle removal | 97% | 93% | 15% | 13% |

EXAMPLE 2 (Filtration efficiency - test in an engine)

The test used a controlled-ignition internal combustion engine of the induction type with four cylinders having a capacity of 1500 cm$^3$, producing 85 horse-power at 5500 revolutions per minute mounted on an engine test bench. The standard methodology used for determining the anti-wear characteristics of lubricating oil at high temperatures was used for this test: this methodology includes two phases of 40 minutes and 20 minutes duration respectively; in the first of these phases the engine is kept at the maximum number of revolutions with the throttle fully open, while in the second the engine is kept running at maximum torque with the throttle fully open. During the evaluation of the filter according to the invention, the one-hour cycle was repeated for a period of operation of 20 hours, a conventional filter and a filter according to the invention being mounted alternately in the lubricating circuit at the end of each period of 20 hours. Table 2 below gives the results obtained from four cycles of 20 hours each. In Table 2, the meaning of the references L and S are as indicated in Example 1.

# EP 0 265 389 B1

TABLE 2

|  |  | L | S |  |
|---|---|---|---|---|
| 1st cycle | Before test | - | - | Conventional U>filter |
|  | After 20 hours | $\overline{174}$ | $\overline{82}$ |  |
|  | % efficiency | - | - |  |
| 2nd cycle | Before test | 174 | 82 | Magnetic U>filter |
|  | After 20 hours | $\overline{8}$ | $\overline{4}$ |  |
|  | % efficiency | 95% | 95% |  |
| 3nd cycle | Before test | 8 | 4 | Conventionl U>filter |
|  | After 20 hours | $\overline{403}$ | $\overline{90}$ |  |
|  | % efficiency | negative |  |  |
| 4nd cycle | Before test | 403 | 90 | Magnetic U>filter |
|  | After 20 hours | $\overline{5}$ | $\overline{3}$ |  |
|  | % efficiency | 98% | 96% |  |

EXAMPLE 3 (Powder retention-test in the simulation apparatus)

In order to evaluate the capacity of the paper of the filter element to retain magnetite particles and hence to avoid these entering into circulation in the lubricating oil circuit, tests were carried out on the apparatus already described in Example 1 and illustrated in the appending drawing, new lubricating oil being circulated in this case and the presence of any magnetic particles being analysed before and after the test (duration 20 hours) by means of a ferrograph.

Table 3 below gives the results of one of the tests.

TABLE 3

|  | L | S |
|---|---|---|
| Before test | O | 5 |
| After 20 hours | O | 4 |
| Magnetised particle retention (%) | - | 100% |

## Claims

1.  Liquid lubricant filter for internal combustion engines, of the type comprising a paper filter element in which magnetised particles are dispersed, characterized in that the average size of the magnetised particles is between 1 and 8 $\mu$m.

2.  Filter according to claim 1, in which the particles are mixed in the cellulose paste during the manufacture of the paper of the filter element, characterized in that the concentration of magnetised particles in the cellulose paste is between 20 and 30% by dry weight.

## Revendications

1.  Filtre à lubrifiant liquide destiné à des moteurs à combustion interne, du type qui comprend un élément de papier filtre dans lequel des particules aimantées sont dispersées, caractérisé en ce que la dimension moyenne des particules aimantées est comprise entre 1 et 8 $\mu$m.

2.  Filtre selon la revendication 1, dans lequel les particules sont mélangées à la pâte de cellulose au cours de la fabrication du papier de l'élément de filtre, caractérisé en ce que la concentration des particules aimantées dans la pâte de cellulose est comprise entre 20 et 30 % du poids à sec.

4

**Patentansprüche**

1. Filter für ein flüssiges Schmiermittel für Verbrennungsmotoren, wobei der Filter ein Papierfilterelement besitzt, in dem magnetisierte Teilchen verteilt sind, dadurch gekennzeichnet, daß die mittlere Größe der magnetisierten Teilchen zwischen 1 und 8$\mu$m liegt.

2. Filter gemäß Anspruch 1, wobei die Teilchen in der Zellulosepaste während der Herstellung des Papiers für das Filterelement gemischt werden, dadurch gekennzeichnet, daß die Konzentration von magnetisierten Teilchen in der Zellulosepaste zwischen 20 und 30% des Trockengewichts liegt.